# EUROPÄISCHE PATENTSCHRIFT

(11) **EP 1 749 440 B1**
(45) Veröffentlichungstag und Bekanntmachung des Hinweises auf die Patenterteilung: **19.09.2012**
(21) Anmeldenummer: 06011145.7
(22) Anmeldetag: 30.05.2006
(51) Int. Cl.: A01K 5/00

(54) **Futterdosierwagen**
Forage dosing vehicle
Véhicule de dosage de fourrage

(30) Priorität: 03.08.2005 DE 202005012175 U
(43) Veröffentlichungstag der Anmeldung: 07.02.2007
(73) Patentinhaber: Trioliet Mullos B.V., 7570 AC Oldenzaal (NL)
(72) Erfinder: Van der Plas, Nicolaas, 7576 WX Oldenzaal (NL)
(74) Vertreter: Grünecker, Kinkeldey, Stockmair & Schwanhäusser

(56) Entgegenhaltungen:
- EP-A1- 0 047 446
- EP-A2- 0 527 428
- DE-U1- 20 103 118
- FR-A- 2 593 020

## Beschreibung

Die Erfindung bezieht sich auf einen Futterdosierwagen, wie er zum Bereitstellen und Vorlegen von Futter in der Landwirtschaft verwendet wird, gemäß den Oberbegriffen der Ansprüche 1, 6 und 8.

Bei der Viehhaltung ist das gemischte Füttern in den letzten Jahren immer beliebter geworden. Um die Mischung des Futters zu bewirken, sind verschiedene Arten von Mischwagen erhältlich, wie beispielsweise Vertikalmischer, wie z.B. gemäß EP 527 428, der DE 201 03 118, Mischwagen mit horizontalen Schnecken oder Paddelmischer. Damit werden Mischgenauigkeiten von weit unter 5 % erzielt, ein Wert, bei dem die Kuh kein Futter mehr gezielt auswählen kann und das gesamte Futter aufnehmen muss. Mancher Mischwagen kann das eingebrachte Material zerkleinern (Mischwagen mit einer vertikalen oder horizontalen Mischschnecke). Im Allgemeinen besitzen Mischwagen eine recht einfache Konstruktion, haben eine lange Lebensdauer und sind wartungsfreundlich. Nachteilig an den bekannten Mischwagen ist jedoch die Tatsache, dass sie eine erhebliche Antriebsleistung erfordern und relativ teuer sind.

Es sind weiterhin sogenannte Futterverteilwagen oder Futterdosierwagen bekannt, die wesentlich einfacher aufgebaut und relativ preisgünstig sind, sowie eine geringe Antriebsleistung erfordern. Zum Mischen sind diese Futterverteilwagen jedoch weniger geeignet. Manche Benutzer füllen diese Wagen sorgfältig schichtweise in dem Bestreben, durch die Verteilung durch die Dosiereinrichtung eine einigermaßen gemischte Ration an Futter vorlegen zu können. In der Praxis ist die sorgfältige Befüllung jedoch zu aufwendig und eine Mischgenauigkeit von 5 % wird kaum erzielt.

Ein Futterdosierwagen der in den Oberbegriffen der unabhängigen Ansprüche berücksichtigte Art ist aus der EP 0 047 446 bekannt. Diese Druckschrift beschreibt einen Futterdosierwagen mit einem Aufnahmebehälter für Silofutter, der mit einem sogenannten Förderboden versehen ist, der die Silage in Richtung auf eine Auslassöffnung fördert. Außerhalb der Auslassöffnung ist ein Förder- und/oder Wurfband vorgesehen, das das Futter quer zur Fahrtrichtung des Futterverteilwagens austrägt. Es ist weiterhin ein zweites Laderaumabteil vorgesehen, das vom Silageabteil getrennt ist und eine eigene Austrittsöffnung aufweist, durch die Futter-Zusatzmittel aus diesem Laderaumabteil auf das Förder- und/oder Wurfband gelangen. Der Austrittsöffnung des Aufnahmebehälters sind eine Vielzahl von Dosierwalzen zugeordnet, durch die das mit dem Futter-Zusatzmittel zu mischende Silagefutter auf das Förder- und/oder Wurfband gelangt. Ebenfalls auf das Förder- und/oder Wurfband gelangt Futter-Zusatzmittel aus dem Laderaumabteil, so dass sich auf dem Förder- und/oder Wurfband beide Futtermittel befinden, die dann zusammen seitlich ausgetragen werden. Außer der Zusammenführung der beiden Futtermittel auf dem Wurfband findet keine Mischung statt.

Der Erfindung liegt somit die Aufgabe zugrunde, einen Futterdosierwagen zu schaffen, bei de auf konstruktiv einfache Weise die Mischgenauigkeit verbessert werden kann.

Die Aufgabe wird durch die Merkmale der Ansprüche 1, 6 oder 8 gelöst.

Durch die zusätzlich vorhandene und im Inneren des Aufnahmebehälterswirksame Mischeinrichtung in den Ausgestaltungen der Ansprüche 1, 6 oder 8 wird die Mischgenauigkeit auf konstruktiv einfache Weise wesentlich verbessert, ohne dass die Zuverlässigkeit und Robustheit, für die Futterverteilwagen bekannt sind, leidet, und ohne dass der Leistungsvorteil der geringeren Antriebsleistung verloren geht.

Eine Möglichkeit besteht in der Verwendung einer rotierenden Verteileinrichtung, die bevorzugt zusätzlich den Transport des Futters am Boden des Aufnahmebehälters übernimmt. Eine derartige Verteileinrichtung enthält eine um eine nach oben weisende Achse drehend angetriebene Verteilscheibe, die mit wenigstens einem sich im Winkel zum Boden nach oben erstreckenden Mischarm und einem sich im Wesentlichen parallel zum Boden verlaufenden Mischarm versehen sein kann. Sind die Mischarme mit einem dreieckigen Querschnitt ausgestattet, so bilden sich Auflageflächen, die das Futter anheben und abrutschen lassen und die in die Futtermenge im Aufnahmebehälter einschneiden, um sowohl die Mischung zu verbessern als auch den Transport des Futters am Boden zu übernehmen. Die rotierende Verteilscheibe wird bevorzugt zusammen mit einem kippbaren Boden verwendet.

Eine weitere Möglichkeit, das Mischergebnis zu verbessern, ohne dass die erforderliche Antriebsleistung erhöht werden muss, besteht darin, ein Mischelement im Inneren des Aufnahmebehälters zu verschieben. Das Mischelement kann in einem bevorzugten Ausführungsbeispiel gleichzeitig die Dosierung übernehmen, sobald es sich an seiner Endposition in der Nähe der Austragsöffnung befindet.

Eine weitere Möglichkeit für eine Mischeinrichtung, die die erforderliche Antriebsleistung für den Futterdosierwagen nicht wesentlich erhöht, besteht in einer verschiebbaren Einfülleinheit. Zweckmäßigerweise sollte die Einfülleinheit eine Zerkleinerungseinrichtung zum Zerkleinern von Futterballen enthalten, so dass auf diese Weise auch Futterballen aufgelöst und das Futter gleichmäßig im Aufnahmebehälter verteilt werden kann. Die Einfülleinheit wird bevorzugt durch einen über dem Aufnahmebehälter verschiebbar angeordneten Einfüllbehälter gebildet, in dem wenigstens eine Zerkleinerungswalze angeordnet ist, und der über eine Übergabeöffnung das Futter auf die dem Boden zugeordnete Transporteinrichtung übergibt. Die Einfülleinheit kann als gesondertes Bauteil nur für diesen Zweck ausgebildet sein, sie kann jedoch auch durch ein Bauteil gebildet werden, das auch die Aufgaben der Dosiereinrichtung erfüllen kann.

Weiterhin kann die Mischwirkung verbessert werden, wenn die Möglichkeit geschaffen wird, den Boden zu kippen. Das Futter kann dann einige Zeit zirkulieren, bevor es in abgesenkter Stellung des Bodens verteilt wird.

Der erfindungsgemäße Futterdosierwagen kann mit allen Merkmalen, einzeln oder in Kombination, ausgerüstet sein, die auch für herkömmliche Futterdosierwagen üblich sind; so kann beispielsweise die Dosiereinrichtung durch wenigstens eine Dosierwalze gebildet werden, es kann eine Zerkleinerungseinrichtung zum Zerkleinern von Futterballen vorgesehen sein, wobei diese Funktion bevorzugt durch die Dosierwalzen erfüllt wird, die Transporteinrichtung kann ein Flachförderer, insbesondere eine Bodenkette sein, wobei der Flachförderer bevorzugt so ausgebildet ist, dass er mit seinem ersten Trumm oberhalb und mit seinem zweiten Trumm unterhalb des Bodens verläuft, so dass eine definierte Förderrichtung vorgegeben ist.

Ausführungsbeispiele der Erfindung werden nachfolgend anhand der Zeichnungen näher erläutert. Es zeigen:
- Fig. 1: eine schematische, perspektivische Darstellung von schräg oben eines ersten Ausführungsbeispiels der Erfindung,
- Fig. 2: ein Ausführungsbeispiel der Erfindung in gekippter Stellung,
- Fig. 3: ein weiteres Ausführungsbeispiel eines erfindungsgemäßen Futterdosierwagens in schematischer, perspektivischer Darstellung,
- Fig. 4: ein weiteres Ausführungsbeispiel eines erfindungsgemäßen Futterdosierwagens in schematischer, perspektivischer Darstellung,
- Fig.5: ein weiteres Ausführungsbeispiel eines erfindungsgemäßen Futterdosierwagens, in einer ersten Arbeitsposition,
- Fig. 6: das Ausführungsbeispiel gemäß Fig. 5 in einer zweiten Arbeitsposition, und
- Fig. 7: das Detail A aus Fig. 6.

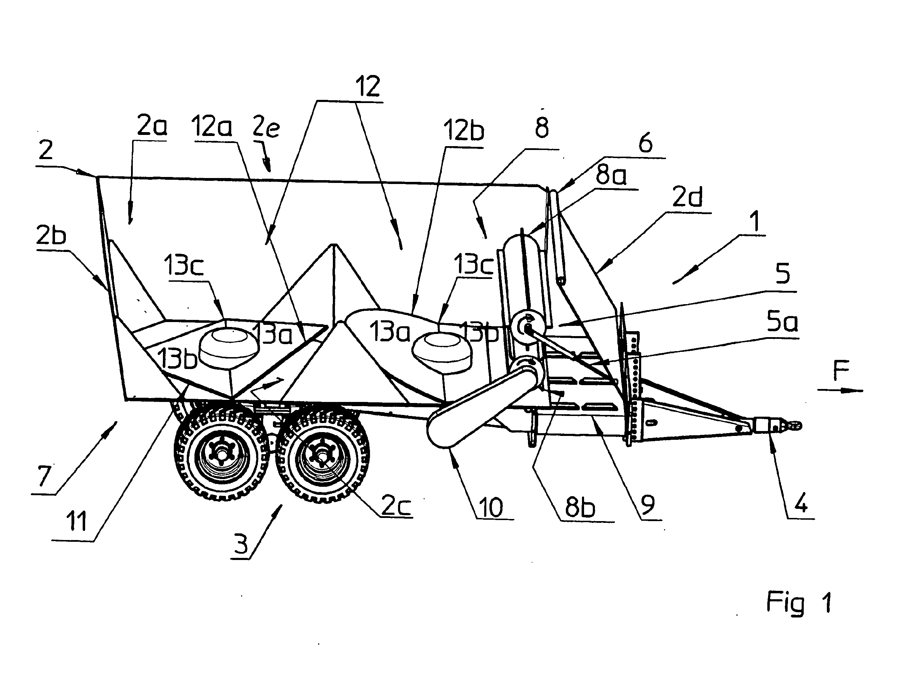

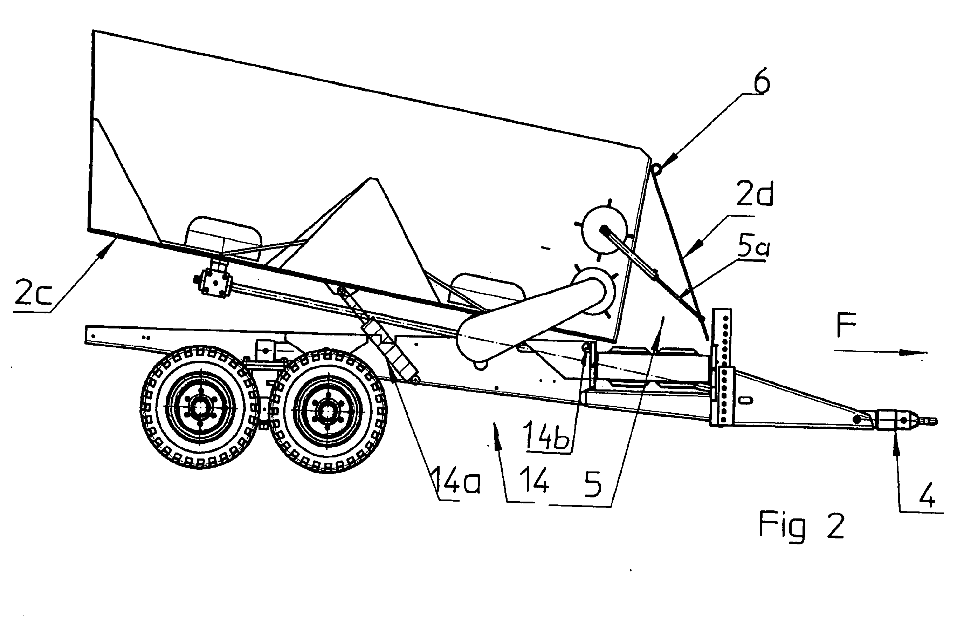

Die Fig. 1 und 2 zeigen ein erstes Ausführungsbeispiel eines erfindungsgemäßen Futterdosierwagens 1, der im Prinzip mit allen Merkmalen und Bauteilen ausgerüstet sein kann, wie dies bei herkömmlichen Futterdosierwagen der Fall ist. Im dargestellten Ausführungsbeispiel enthält der Futterdosierwagen 1 einen Kasten 2, der auf Rädern 3 verfahrbar ist und mit einer Kopplungseinrichtung 4 zum Ankoppeln an ein Zugfahrzeug, beispielsweise einen Schlepper, versehen ist, wobei die Anordnung der Kopplungseinrichtung die bevorzugte Fahrtrichtung F, in Fig. 1 nach rechts, vorgibt, die Kopplungseinrichtung 4 somit vorn am Behälter 2 angeordnet ist.

Der Aufnahmebehälter 2 ist als üblicher Kasten ausgebildet und enthält gegenüberliegende Seitenwände 2a (in Fig. 1 ist nur eine Seitenwand 2a gezeigt, um eine bessere Einsicht in den Aufnahmebehälter 2 zu schaffen), eine Rückwand 2b und einen Boden 2c, die einen Laderaum begrenzen. Bevorzugt an der vorderen, d.h. der Kopplungseinrichtung 4 zugewandten Stirnseite ist eine Austragsöffnung 5 vorgesehen, die sich im dargestellten Ausführungsbeispiel über die gesamte Stirnseite des Aufnahmebehälters 2 erstreckt und durch eine Abdeckung, wie eine Tür oder eine Klappe 2d, verschließbar ist. Die Klappe 2d ist um eine sich waagerecht zwischen den beiden Seitenwänden 2a erstreckende und im oberen Bereich der Seitenwände 2a gelagerte Achse 6 zum Öffnen und Schließen der Austragsöffnung 5 mit Hilfe eines Schließmechanismus 5a, bevorzugt einer hydraulischen ZylinderKolben-Anordnung verschwenkbar und bevorzugt in der Schließstellung zu verriegeln. Der Kasten 2 enthält an der dem Boden 2c gegenüberliegenden Seite eine Einfüllöffnung 2e, die im dargestellten Ausführungsbeispiel über den gesamten oberen Bereich des Kastens 2 reicht.

Dem Boden 2c ist eine Transporteinrichtung 7 zugeordnet. Die Transporteinrichtung 7 ist so ausgebildet, dass sie das in den Kasten 2 durch die Einfüllöffnung 2e eingefüllte Futter aufnimmt und in Richtung einer Dosiereinrichtung 8 transportiert, die der Austragsöffnung 5 zugeordnet ist. Die Dosiereinrichtung 8 enthält im dargestellten Ausführungsbeispiel zwei übereinanderliegende Dosierwalzen 8a, 8b, die über horizontale Achsen in gleicher Richtung derart angetrieben werden, dass Futter an der Innenseite jeder Walze nach oben gefördert wird, wobei eventuelle Zusammenballungen, insbesondere auch zwischen den Walzen zerrissen werden. Die Dosierwalzen 8a, 8b sind mit Dosierelementen, im dargestellten Ausführungsbeispiel achsparallel vorstehende und zueinander beabstandete Stege, versehen, die in der Lage sind, Futter gleichmäßig und gut verteilt aus dem Inneren des Aufnahmebehälters 2 durch die Austragsöffnung 5 nach außen zu fördern. Die Dosierwalzen 8a, 8b sind weiterhin aufgrund der Stege oder anderer, nicht gezeichneter aber bekannter Ausgestaltungen in der Lage, Futterzusammenballungen oder vorgefertigte Futterballen aufzulösen und das daraus entnommene Futter gleichmäßig und verteilt zu fördern.

Die Dosiereinrichtung 8 und die Klappe 2d sind nahe beieinander angeordnet, so dass sich zwischen ihnen kein Futter ansammeln kann. Gegebenenfalls kann die Klappe 2d gekrümmt oder in anderer Weise an die Form der Dosiereinrichtung 8 bzw. der Dosierwalzen 2a, 2b angepasst sein, so dass sich im Bereich der Dosiereinrichtung 8 keine toten Ecken ausbilden. Bevorzugt ist die Klappe 2d eng an den Walzen 8a, 8b anliegend geformt.

Obwohl im dargestellten Ausführungsbeispiel zwei Dosierwalzen gezeigt sind, ist es durchaus möglich, dass lediglich eine Dosierwalze vorgesehen ist, die mit der Transporteinrichtung 7 zusammenwirkt, oder dass drei oder noch mehr Dosierwalzen vorgesehen sind, die jeweils zwischen sich einen Förderspalt bilden.

Das durch die Dosierwalzen 8 und die Austragsöffnung 5 austretende Futter gelangt auf einen Verteilförderer 9, der im dargestellten Ausführungsbeispiel als sogenannter Querförderer ausgebildet ist, d.h. ein Förderband oder eine Förderkette od. dgl. enthält, der zur gewünschten Austragsrichtung quer zur Fahrtrichtung F fördert.

Der Antrieb sowohl der Dosiereinrichtung 8 als auch der Transporteinrichtung 7 erfolgt von außerhalb des Laderaums über eine Antriebseinrichtung 10 über die Kopplungseinrichtung 4 vom Schlepper aus.

Im Betrieb wird das Futter in den Aufnahmebehälter 2 entweder schichtweise oder partienweise oder getrennt nach Futtersorten eingegeben. Durch die Transporteinrichtung 7 und die Dosiereinrichtung 8 wird bereits dafür gesorgt, dass eine gewisse Mischung stattfindet, diese Mischung führt jedoch keinesfalls zur angestrebten Mischungsgenauigkeit von 5 % oder weniger.

Erfindungsgemäß ist deshalb eine weitere Mischeinrichtung 11 vorgesehen. Die Mischeinrichtung 11 enthält im dargestellten Ausführungsbeispiel gemäß den Fig. 1 und 2 eine rotierend angetriebene Verteileinrichtung 12. Die Verteileinrichtung 12 enthält wenigstens eine, dargestellt sind zwei in Fahrtrichtung hintereinander angeordnete Verteilscheiben 12a und 12b, die jeweils um eine sich vom Boden 2c nach oben erstreckende Drehachse rotieren. Die Drehachse muss nicht unbedingt senkrecht zum Boden verlaufen, sondern kann mit dem Boden 2c einen Winkel einschließen. Jede Verteilscheibe 12a, 12b enthält wenigstens einen, bevorzugt zwei einander gegenüberliegende Mischarme 13a, 13b. Der Mischarm 13a führt vom Boden 2c schräg nach oben, d.h. er schließt mit dem Boden 2c einen Winkel ein, der bevorzugt kleiner als 45° ist. Der Mischarm 13b verläuft bevorzugt parallel zum Boden 2c. Die Mischarme 13a, 13b sind im Wesentlichen plattenförmig ausgebildet, überdecken einen Großteil des Bodens 2c und weisen eine im Wesentlichen dreieckige Auflagefläche auf, auf der das Gewicht des Futters im Aufnahmebehälter 2 ruht. Die beiden dreieckigen Mischarme 13a, 13b sind mit ihren Basen aneinander anstoßend angeordnet und bilden eine Kante 13c, die einen Bereich des Bodens 2c um die Drehachse der Verteilscheiben 12a, 12b herum überstreicht. Die Mischarme 13a, 13b können auch in Drehrichtung der Verteilscheiben nach hinten ansteigend angeordnet sein, um ein besseres Ergebnis zu erzielen.

Im dargestellten Ausführungsbeispiel ist die Mischeinrichtung 11 so ausgebildet, dass sie auch die Transportaufgaben der Transporteinrichtung 7, d.h. den Transport des Futters zur Dosiereinrichtung 8, übernimmt.

Um zu vermeiden, dass sich in den Zwickelbereichen zwischen den beiden Verteilscheiben 12a, 12b Futterreste ansammeln, die nicht mehr gefördert werden, können die Zwickelbereiche, mit Leitkörpern ausgefüllt werden. Die Leitkörper haben die von anderen Mischeinrichtungen bereits bekannte, etwa trapezförmige Form mit den den Futterfluss fördernden Ausgestaltungen der Seitenfläche.

Die Mischeinrichtung 11 enthält weiterhin wie Fig. 2 zeigt, eine Einrichtung 14 zum Schrägstellen des Bodens 2c. Dabei kann der Boden über eine Kippeinrichtung 14a um eine quer zur Fahrtrichtung F verlaufende Achse 14b verkippt werden. Im dargestellten Ausführungsbeispiel befindet sich die Achse 14b im vorderen Bereich des Bodens 2c, so dass der hintere Bereich des Bodens 2c nach oben angehoben wird und gleichzeitig Transportaufgaben zur Dosiereinrichtung 8 übernommen werden. Um dabei zu verhindern, dass Futter aus der Austragsöffnung 5 unkontrolliert herausfällt, ist eine Schließeinrichtung 5a für die Tür oder Klappe 2d vorgesehen, die im dargestellten Ausführungsbeispiel einen hydraulischen Zylinder enthält, der bevorzugt beim Einleiten der Kippbewegung automatisch betätigt wird und die Tür oder Klappe 2d an die Austragsöffnung 5 heranzieht.

Die Mischeinrichtung 11 kann weiterhin zusätzlich oder alternativ eine Kippeinrichtung enthalten, die in der Lage ist, den Boden 2c um eine im hinteren Bereich des Bodens 2c angeordnete, quer zur Fahrtrichtung F verlaufende Querachse zu verkippen.

In beiden Fällen wird der Kippwinkel so gewählt, dass das Futter auf dem Boden 2c ins Rutschen kommt. Durch wiederholtes Ankippen und Absenken in Fig. 2 sowie, bei zwei Achsen, ein abwechselndes Ankippen der Vorderseite gefolgt von einem Ankippen der gegenüberliegenden Rückseite kann bereits eine sehr gute zusätzliche Durchmischung erreicht werden, wobei die zum Verkippen notwendige Antriebsleistung, beispielsweise durch Verwendung von hydraulischen Hebeeinrichtungen oder mechanischen Gestängen, gering gehalten werden.

Im dargestellten Ausführungsbeispiel wird der Boden zusammen mit den Seitenwänden, der Rückwand, der Dosiereinrichtung und der Klappe verschwenkt. Es ist jedoch auch möglich, lediglich den Boden innerhalb des stationär bleibenden Aufnahmebehälters 2 zu verkippen.

Darüber hinaus soll der Begriff "Achse" nicht im strengen Sinne als Mittellinie verstanden werden; es ist vielmehr ebenfalls möglich, die Kippbewegung durch einen Anteil einer Verschiebebewegung zu überlagern.

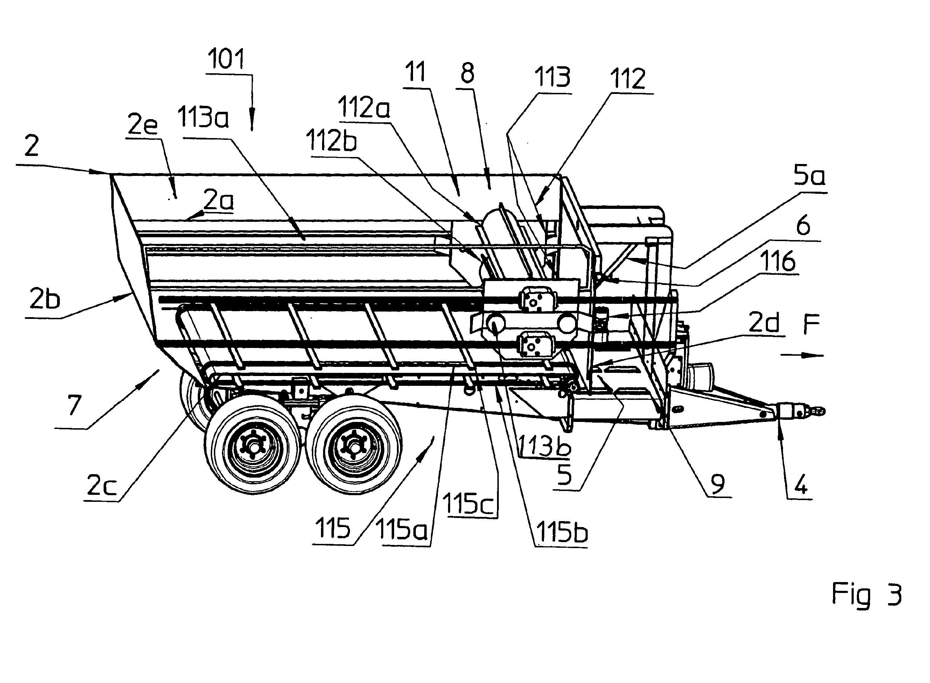

Aus Fig. 3 ist ein weiteres Ausführungsbeispiel eines erfindungsgemäßen Futterdosierwagens 101 ersichtlich, wobei gleiche bzw. vergleichbare Bauteile mit den gleichen Bezugszeichen gekennzeichnet und nicht nochmals erläutert sind.

Auch das Ausführungsbeispiel nach Fig. 3 enthält eine dem Boden zugeordnete Transporteinrichtung 7 und eine Dosiereinrichtung 8. Die Transporteinrichtung 7 ist im vorliegenden Ausführungsbeispiel als Flachförderer ausgebildet, d.h. sie bewirkt eine bodennahe Förderung. Bevorzugt ist die Transporteinrichtung 7 als sogenannter Förderboden 115, z. B. als Bodenkette ausgebildet. Der Förderboden 115 enthält ein erstes Trumm 115a und ein zweites Trumm 115b, die jeweils durch zwei endlos umlaufende, zueinander beabstandete Förderbänder oder -ketten gebildet sind, die über Transportstege 115c miteinander verbunden sind. Das obere Trumm 115a bewegt sich dabei oberhalb des Bodens 2c, d.h. innerhalb des Aufnahmebehälters 2, während sich das andere Trumm 115b unterhalb des Bodens 2c bewegt. Die übliche Antriebsrichtung des Förderbodens 115 wird so gewählt, dass das obere Trumm 115a sich in Fahrtrichtung F bewegt, d.h. sich in Richtung von der Rückwand 2b zur Austragsöffnung 5 bewegt. Die Richtung kann jedoch auch kurzzeitig umgesteuert werden, wenn beispielsweise Verstopfungen gelöst werden sollen.

Der Futterdosierwagen 101 enthält eine Mischeinrichtung 11, die ein durch das Innere des Aufnahmebehälters 2 verschiebbares Mischelement 112 aufweist. Das Mischelement 112 enthält wenigstens eine, bevorzugt zwei rotierend angetriebene Walzen 112a und 112b, die analog der Dosierwalzen mit Walzenspalt übereinander angeordnet und ausgebildet sind. Die Walzen 112a, 112b sind in einem Schlitten 113 gelagert, mit dem sie unterhalb der Einfüllöffnung 2e durch das Innere des Aufnahmebehälters 2 zwischen der Rückwand 2b und der Austragsöffnung 5 linear verschoben werden können. In Fig. 3 sind die Walzen 112a, 112b am Beginn der Verschiebung gezeigt, wobei sie sich bereits ein Stück von der Austragsöffnung 5 entfernt haben. Im dargestellten Ausführungsbeispiel übernimmt das Mischelement 112 die Aufgaben der Dosiereinrichtung 8, d.h. die Walzen 112a, 112b geben das Futter aus der Austragsöffnung 5 auf die Verteileinrichtung 9 aus, sobald sich das Mischelement 112 an der Austragsöffnung 5 befindet. Bei dieser Ausgestaltung ist es ebenfalls zweckmäßig, wenn eine Tür oder Klappe 2d vorgesehen ist, die bevorzugt an die Walzen 112a, 112b angepasst, d.h. gekrümmt ist, und sich über einen Schließmechanismus 5a, dargestellt ist ein hydraulischer Kolben, schließen und verriegeln lässt.

Der Schlitten 113 läuft bevorzugt über Rollen 113b in Führungen 113a, die in beiden Seitenwänden, dargestellt ist lediglich die Seitenwand 2a, vorgesehen sind. Die Führungen 113a erstrecken sich parallel zum Boden 2c, so dass sich der Schlitten 113 im Inneren des Kastens 2, unterhalb von dessen Einfüllöffnung 2e, im Wesentlichen parallel zum Boden 2c verschieben lässt. Der Antrieb dieser Verschiebebewegung erfolgt beispielsweise über wenigstens einen Motor, bevorzugt einen Hydromotor 116, der mit dem Schlitten 113 verbunden ist und beispielsweise einen Kettenantrieb betreibt. Die Walzen werden bevorzugt mit Winkelgetrieben mit Hohlwelle angetrieben. Es können jedoch alle bekannten Antriebssysteme verwendet werden. Die Umkehrung der Bewegung, beispielsweise bei Erreichen der Rückwand 2b kann durch Schalter oder Umkehrventile, die nicht gezeichnet sind, oder durch andere bekannte Steuerelemente bewirkt werden, wobei sowohl die Drehrichtung beider Walzen 112a, 112b als auch die Linearbewegung des Schlittens 113 umgekehrt wird.

Beim Beladen des Futterwagens 101 über die Einfüllöffnung 2e kann somit das Mischelement 112 in Bewegung gesetzt werden, d.h. es werden sowohl die Walzen 112a, 112b gleichsinnig in Drehung versetzt als auch der Schlitten 113 in einer linearen Bewegung hin und zurück durch den Laderaum verschoben. Dadurch wird ein zusätzlicher Mischeffekt bei der Beladung des Futterdosierwagens 101 erreicht.

Auch der Futterdosierwagen 101 kann mit einer der vorangehend beschriebenen Kippeinrichtungen versehen sein.

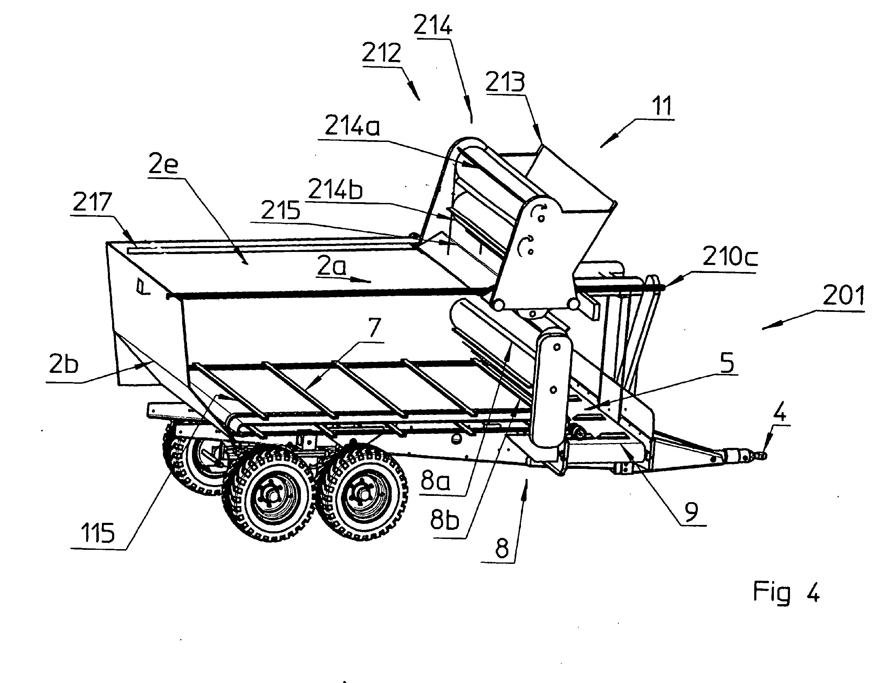

Fig. 4 zeigt ein weiteres Ausführungsbeispiel eines Futterverteilwagens 201, wobei gleiche bzw. vergleichbare Bauteile, die bereits in den vorangegangenen Ausführungsbeispielen beschrieben wurden, mit den gleichen Bezugszeichen gekennzeichnet und nicht nochmals erläutert sind. Der Futterverteilwagen 201 enthält eine Transporteinrichtung 7, die als Bodenförderer 115 ausgebildet ist. Der Futterwagen 201 enthält weiterhin eine Dosiereinrichtung 8, die die den stationär der Austragsöffnung 5 zugeordneten, senkrecht übereinander angeordneten und um horizontale Achsen unter Ausbildung eines Walzspaltes gleichsinnig verdrehbaren Walzen 8a, 8b des Futterwagens gemäß Fig. 1 enthält. Die Austragsöffnung 5 ist hier nicht durch eine Klappe verschlossen, sollte dies jedoch sein, wenn auch der Futterwagen 201 eine Kippvorrichtung enthält.

Auch der Futterverteilwagen 201 enthält eine weitere Mischeinrichtung 11, die im dargestellten Ausführungsbeispiel als Einfülleinheit 212 ausgebildet ist. Die Einfülleinheit 212 enthält einen Einfüllbehälter 213, der im Wesentlichen Trichterform aufweist. Im oder am Einfüllbehälter 213 ist eine Verteil- und/oder Zerkleinerungseinrichtung 214 angeordnet, die Futter aus dem Einfüllbehälter 213 abzieht, gegebenenfalls dort eingefüllte Futterballen zerkleinert, und diese über eine Übergabeöffnung 215 ausgibt. Im dargestellten Ausführungsbeispiel enthält die Verteil- und/oder Zerkleinerungseinrichtung 214 zwei Walzen 214a, 214b, die bevorzugt analog den Dosierwalzen 8a bzw. 8b ausgebildet sind, wobei die Übergabeöffnung 215 zwischen den beiden Walzen und/oder unterhalb davon vorgesehen ist. Die Walzen 214a, 214b sind im Einfüllbehälter 213 senkrecht zueinander und mit im Wesentlichen horizontalen Drehachsen so angeordnet, dass sich zwischen ihnen ein Walzenspalt bildet. Die Walzen 214a, 214b sind über einen geeigneten, nicht dargestellten Antrieb gleichsinnig zueinander angetrieben.

Die Einfülleinheit 212 ist oberhalb oder im oberen Bereich des Aufnahmebehälters 2, d.h. in oder an der Einfüllöffnung 2e, im Wesentlichen parallel zum Boden 2c, verschiebbar angeordnet. Im dargestellten Ausführungsbeispiel kann sich die Einfülleinheit 212 über die gesamte Länge des Aufnahmebehälters 2 in Fahrtrichtung F, d.h. von der Austragsöffnung 5 bis zur Rückwand 2b bewegen, so dass durch die Einfülleinheit 212 das Futter in gleichmäßigen Schichten über den gesamten Aufnahmebehälter 2 verteilt werden kann. Dieser Antrieb erfolgt über einen bevorzugt mechanischen Antriebszug 210c wiederum über die Kopplungseinrichtung 4 vom Schlepper aus. Im dargestellten Ausführungsbeispiel enthält der mechanische Antriebszug 210c wenigstens eine, bevorzugt zwei Antriebsstangen 217, die sich parallel der Seitenwände von der Austragsöffnung 5 zur Rückwand 2b erstrecken und knapp unterhalb der Einfüllöffnung 2e angeordnet sind. Diese Antriebsstangen 217 dienen sowohl der Führung der Einfülleinheit 212 als auch dem Antrieb der Verschiebebewegung und/oder der Drehbewegung der Walzen 214a, 214b. Es können wiederum Schalter oder Umkehrventile (nicht gezeichnet) vorgesehen sein, die die Verschiebebewegung der Einfülleinheit 212, insbesondere das Umkehren der Antriebsrichtung an der Rückwand 2b und/oder an der Einfüllöffnung 5 steuern.

Auch der Futterverteilwagen 201 kann zum Kippen des Bodens 2c ausgebildet sein und/oder eine andere Transporteinrichtung 7 enthalten.

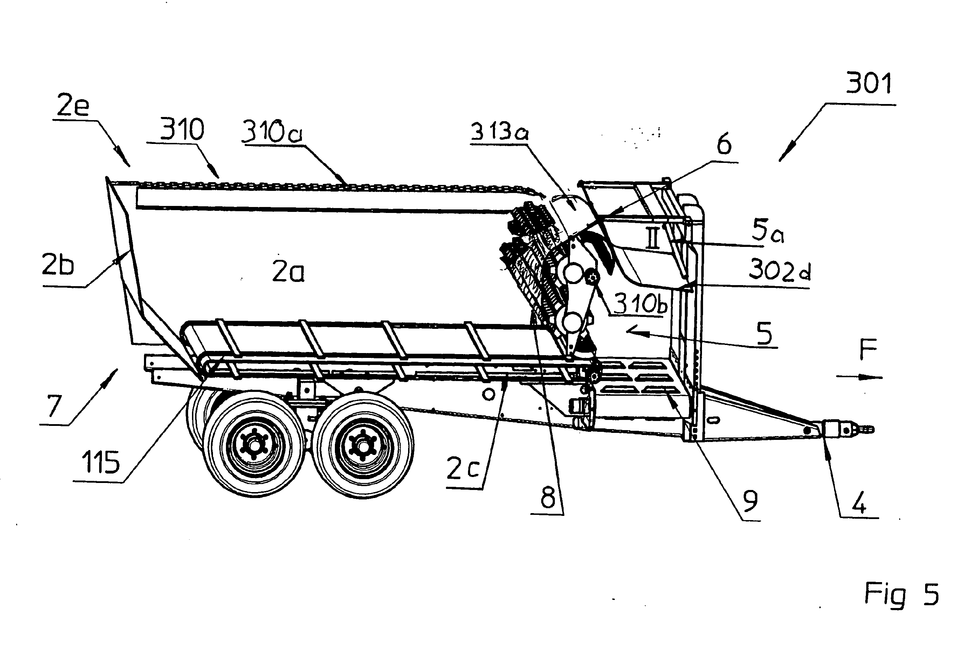

Aus den Fig. 5 bis 7 ist ein weiteres Ausführungsbeispiel eines erfindungsgemäßen Futterverteilwagens 301 ersichtlich, bei dem gleiche bzw. vergleichbare Bauteile mit den gleichen Bezugszeichen wie in den vorangegangenen Ausführungsbeispielen versehen und nicht nochmals erläutert sind. Auch der Futterverteilwagen 301 enthält somit eine Transporteinrichtung 7, die im dargestellten Ausführungsbeispiel den Bodenförderer 115 aufweist. Es ist weiterhin eine Dosiereinrichtung 8 vorgesehen, die am Ende der Transporteinrichtung 7 angeordnet und der Austragsöffnung 5 zugeordnet ist.

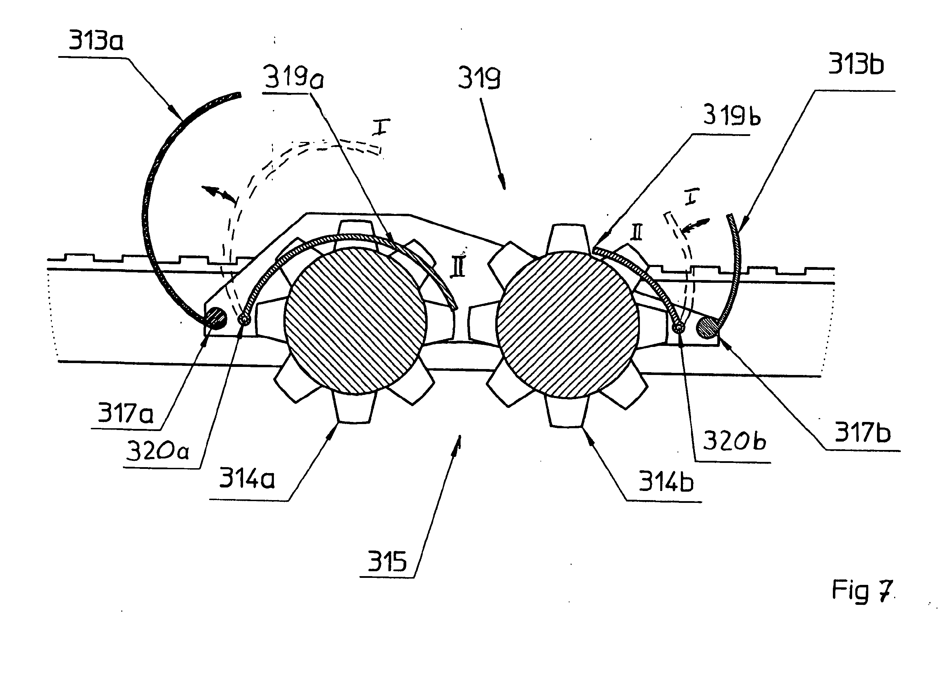

Der Futterverteilwagen 301 enthält eine weitere Mischeinrichtung 11, die im dargestellten Ausführungsbeispiel wiederum eine Einfülleinheit 312 umfasst. Die Einfülleinheit 312 enthält eine Verteil- und/oder Zerkleinerungseinrichtung 314 mit einer ersten und einer zweiten Walze 314a, 314b. Die Walzen 314a, 314b sind mit parallelen Achsen unter Freilassen eines Walzenspaltes 315 (Fig. 7) nebeneinander angeordnet und gleichsinnig oder gegenläufig angetrieben. Die Walzen 314a und 314b sind an ihren Umfängen mit radial vorstehenden Zerkleinerungselementen 318 versehen, die im dargestellten Ausführungsbeispiel als plattenförmige Zähne ausgebildet sind. Die plattenförmigen Zähne sind mit ihrer Längserstreckung in Umfangsrichtung ausgerichtet und sowohl in Umfangsrichtung als auch axial zueinander beabstandet.

Die Einfülleinheit 312 enthält weiterhin Begrenzungselemente, die eine Art Einfüllbehälter 313 definieren. Im dargestellten Ausführungsbeispiel wird der Einfüllbehälter 313 an den in Fahrtrichtung F vom und hinten liegenden Seiten durch Klappen 313a, 313b begrenzt, die jeweils um eine parallel zu den Walzen 314a, 314b verlaufende Achse 317a, 317b aus einer im Wesentlichen vertikalen Stellung, in der sie ein größtmögliches Volumen des Einfüllbehälters 313 begrenzen, in Zwischenstellungen verschwenkbar sind, je nach Art des Futters. Die Begrenzungselemente weisen eine äußere Betätigungsfläche zum Betätigen einer Klappe auf, wie dies nachfolgend noch näher erläutert wird. Die Betätigungsfläche ist bevorzugt durch die äußere, gekrümmte Oberfläche der Klappen 313a, 313 b gebildet.

Die Einfülleinheit 312 enthält weiterhin eine Einstelleinrichtung 319 zum Einstellen der Mischeinrichtung 12 an unterschiedliche Partikelgrößen und/oder unterschiedliche Mengen des Futters, die in den Walzenspalt 315 gelangen sollen. Die Einstelleinrichtung 319 enthält eine erste Klappe 319a und eine zweite Klappe 319b, die jeweils um eine parallel zu den Walzen 314a, 314b verlaufende Achse 320a, 320b verschwenkbar sind und zwischen den Klappen 313a, 313b und der jeweils zugeordneten Walze 314a, 314b angeordnet sind. Die Klappen 319a, 319b können aus einer Stellung I, in der sie vollständig aus dem Einflussbereich der Walzen 314a, 314b herausgeschwenkt sind in eine Stellung II verschwenkt werden, in der die Menge und/oder die Partikelgröße des in den Walzenspalt 315 gelangenden Materials begrenzt oder bestimmt wird. Die Klappen 319a, 319b können zu diesem Zweck mit Schlitzen versehen sein, so dass sie sich, wie Fig. 7 zeigt, über die Zerkleinerungselemente 318 legen und auf dem Walzenkern aufliegen können. Deshalb sind die Klappen 319a, 319b ebenfalls gekrümmt und bevorzugt in ihrer Krümmung an die Krümmung des Walzenkerns angepasst.

Die Einfülleinheit 312 ist zwischen der Austragsöffnung 5 und der Rückwand 2b im Bereich der Einfüllöffnung 2e hin und zurück bewegbar. Zu diesem Zweck ist eine Antriebseinrichtung 310 vorgesehen, die bevorzugt eine Zahnstange 310a enthält, die sich entlang wenigstens einer der Seitenwände 2a erstreckt. Die Antriebseinrichtung 310 wirkt somit gleichzeitig als Führung für die Bewegung der Einfülleinheit 312. Die Antriebseinrichtung 310 enthält weiterhin ein über einen Hydromotor angetriebenes Zahnrad oder Ritzel 310b, das an der Einfülleinheit angeordnet ist.

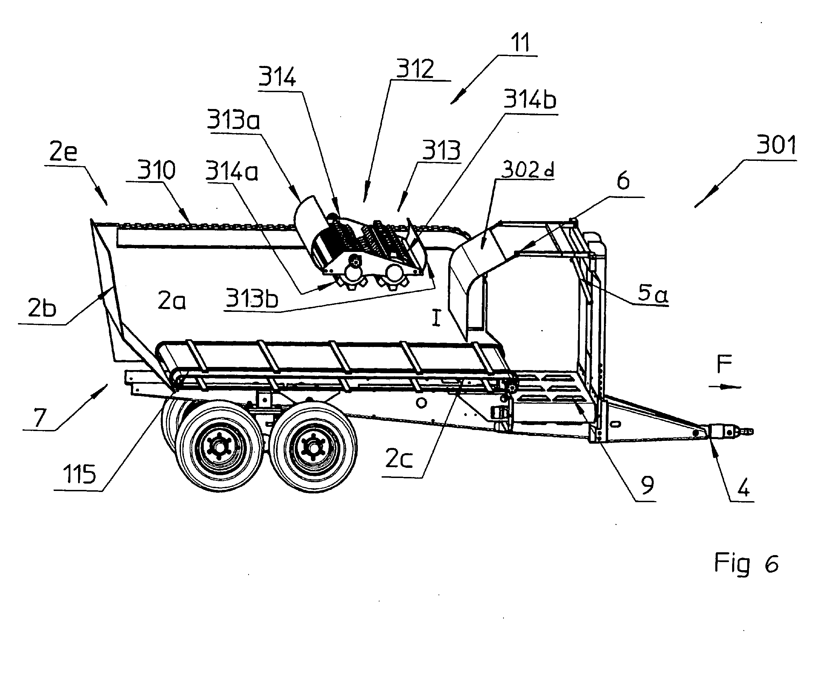

Im dargestellten Ausführungsbeispiel übernimmt die Einfülleinheit 312 gleichzeitig die Funktion der Dosiereinrichtung 8. Zu diesem Zweck ist der Antrieb 310 so geführt, dass sich die Einfülleinheit 312 von ihrer Einfüllposition an der Einfüllöffnung 2e, in der die Walzen im Wesentlichen horizontal nebeneinander liegen (Fig. 6), in eine Dosierposition bewegen kann, in der die Walzen mit ihren Achsen im Wesentlichen vertikal übereinander liegen (Fig. 5). Die Verschwenkbarkeit der Klappen 319a, 319b kann beibehalten werden, so dass auch die Dosiereinrichtung 8 an unterschiedliche Partikelgrößen des Futters bzw. unterschiedliche Futterkonsistenzen angepasst werden kann. Im dargestellten Ausführungsbeispiel befinden sich die Klappen 319a, 319b in der Stellung I.

Um sicherzustellen, dass der Platz an der Austragsöffnung 5 für die sich in der Dosierstellung befindende Einfülleinheit 312 frei bleibt, wenn die Einfülleinheit 312 zum Beladen verwendet wird, ist ein Platzhalter 302d vorgesehen, der so ausgebildet ist, dass er sowohl die Austragsöffnung 5 schließt, als auch den Platz für die Einfülleinheit 312 freihält und gegen den Laderaum des Kastens 2 abschirmt, wenn er sich in der in Fig. 6 gezeigten, eingeklappten Stellung I befindet. Im übrigen ist der Platzhalter 302d ähnlich wie die Klappe 2d der vorangegangenen Ausführungsbeispiele ausgebildet, d.h. um eine im Wesentlichen horizontale, sich oberhalb der Dosiereinrichtung 8 befindende Achse 6 aus der Stellung I in eine Stellung II (Fig. 5) verschwenkbar, in der der Platzhalter 302d die Austragsöffnung 5 freigibt. Im dargestellten Ausführungsbeispiel ist der Platzhalter 302d winkelartig gebogen, um die Achse 6 genau senkrecht über der Austragsöffnung 5 anordnen zu können. Eine andere Gestalt des Platzhalters 302d ist, je nach den konstruktiven Gegebenheiten und den Anbringungsmöglichkeiten der Achse 6 ebenfalls möglich. Der Platzhalter 302d kann mit den bereits beschriebenen hydraulischen Kolbeneinrichtungen 5a betätigt werden, es ist jedoch auch möglich, und im vorliegenden Ausführungsbeispiel dargestellt, den Platzhalter 302d durch Schwerkraft in seine Schließposition I zu verschwenken und durch die sich in die Dosierstellung bewegende Einfülleinheit 312 in die Offenposition II drücken zu lassen, wobei dies bevorzugt durch die Anlage der oberen Begrenzung 312a am Platzhalter 302d geschieht.

Der Futterverteilwagen 301 kann mit der bereits beschriebenen Kippeinrichtung versehen sein.

Im Gebrauch wird die Einfülleinheit 312 aus der Stellung der Dosiereinrichtung in die Stellung zum Einfüllen, d.h. in eine Stellung gebracht, in der die Walzen 314a, 314b horizontal nebeneinander liegen und in oder an der Einfüllöffnung 2e angeordnet sind. Durch das Nachobenfahren der Einfülleinheit 312 fehlt die Unterstützung und der Platzhalter 302d fällt aus seiner Stellung II in die Stellung I unter Wirkung der Schwerkraft, unterstützt und verriegelt durch die Kolbeneinheit 5a. Die Begrenzungen 313a, 313b befinden sich in einer ausgeklappten Stellung und die Einstelleinrichtung 319 in einer Stellung, die an die Konsistenz und Partikelgröße des gerade zu beladenden Futters angepasst ist. Das Futter wird in den Einfüllbehälter 313 eingegeben und durch die Walzen 314a, 314b aufgelockert, vergleichmäßigt und gegebenenfalls geschnitten. Die Einfülleinheit 312 bewegt sich dabei zwischen der Austragsöffnung 5 und der Rückwand 2b hin und her, so dass das Futter durch den Walzenspalt 315 in Lagen auf der Transporteinrichtung 7 abgelegt wird und dadurch vermischt wird. Ist der Kasten befüllt, bewegt sich die Einfülleinheit 312 wieder in die Dosierstellung und drückt dabei den Platzhalter 302d in seine offene Stellung II. Die Ausgabe des Futters kann begonnen werden.

In Abwandlung können konstruktive Einzelheiten unter den beschriebenen und gezeichneten Ausführungsbeispiele ausgetauscht werden. Auch können beispielsweise anstelle der Verteilscheiben andere rotierende Verteileinrichtungen, wie beispielsweise Trommeln, eingesetzt werden. Darüber hinaus kann bei allen Ausführungsbeispielen ein Druck-Schaltsystem eingesetzt werden, bei dem die Bewegung bei einem gewissen Druck beendet oder sogar umgekehrt wird, um ein Verklemmen zu vermeiden. Die Dosierwalzen werden bevorzugt mechanisch angetrieben und zwar über ein zentrales, oben liegendes Winkelgetriebe mit einer verschiebbaren Welle mit Hohlverbindung, mit oder ohne Umkehreinrichtung für die Drehrichtung. Dabei ist es möglich, aus diesem Getriebe auch eine mechanische Bewegung in Längsrichtung, beispielsweise für die Einfülleinheit oder das Mischelement abzuleiten, z.B. mit Hilfe einer Drehspindel, eines Zahnrades oder eines Kettenantriebs. Eventuell kann ein Umkehrantrieb am Ende des Wagens vorgesehen sein. Es ist weiterhin nicht unbedingt erforderlich, den gesamten Boden bzw. den Flachförderer zu kippen. Gegebenenfalls kann es ausreichen, nur einen Teil des Bodens schräg zu stellen, beispielsweise den Boden im Bereich einer der Verteilscheiben. Die Erfindung ist auch einsetzbar bei Futterdosierwagen mit einer an der Rückwand oder an anderer Stelle angeordneten Austragsöffnung.

## Patentansprüche

1. Futterdosierwagen (1), mit einem mit einer Einfüllöffnung (2e), einer Austragsöffnung (5) und einem Boden (2c) versehenen Aufnahmebehälter (2), einer dem Boden (2c) zugeordneten Transporteinrichtung (7), und einer der Austragsöffnung (5) zugeordneten Dosiereinrichtung (8), **gekennzeichnet durch** eine zum Mischen des Futters im Aufnahmebehälter (2) wirksame Mischeinrichtung (11), die wenigstens eine Verteilscheibe (12a, 12b) enthält die um eine vom Boden (2c) nach oben weisende Achse rotierend antreibbar ist.

2. Futterdosierwagen nach Anspruch 1, **dadurch gekennzeichnet, dass** die Verteilscheibe (12a, 12b) wenigstens einen sich im Winkel zum Boden (2c) nach oben erstreckenden Mischarm (13a) enthält.

3. Futterdosierwagen nach Anspruch 1 oder 2, **dadurch gekennzeichnet, dass** die Verteilscheibe (12a, 12b) einen im Wesentlichen parallel zum Boden (2c) verlaufenden Mischarm (13b) aufweist.

4. Futterdosierwagen nach Anspruch 2 oder 3, **dadurch gekennzeichnet, dass** der Mischarm (13a, 13b) eine im Wesentlichen dreieckige, nach oben weisende Auflagefläche enthält.

5. Futterdosierwagen nach einem der Ansprüche 1 bis 4, **dadurch gekennzeichnet, dass** die Verteileinrichtung (12) wenigstens teilweise als dem Boden (2c) zugeordnete Transporteinrichtung (7) ausgebildet ist.

6. Futterdosierwagen (101) mit einem mit einer Einfüllöffnung (2e), einer Austragsöffnung (5) und einem Boden (2c) versehenen Aufnahmebehälter (2), einer dem Boden (2c) zugeordneten Transporteinrichtung (7), und einer der Austragsöffnung (5) zugeordneten Dosiereinrichtung (8), **gekennzeichnet durch** eine zum Mischen des Futters im Aufnahmebehälter (2) wirksame Mischeinrichtung (11), die eine Einrichtung (113a, 116) zum Verschieben eines Mischelements (112) im Inneren des Aufnahmebehälters (2) aufweist.

7. Futterdosierwagen nach Anspruch 6, **dadurch gekennzeichnet, dass** die Dosiereinrichtung (8) wenigstens eine Dosierwalze (112a, 112b) enthält, die als Mischelement (112) ausgebildet und von der Austragsöffnung (5) im Wesentlichen parallel zum Boden (2c) hin und zurück durch das Innere des Aufnahmebehälters (2) bewegbar ist.

8. Futterdosierwagen (201) mit einem mit einer Einfüllöffnung (2e), einer Austragsöffnung (5) und einem Boden (2c) versehenen Aufnahmebehälter (2), einer dem Boden (2c) zugeordneten Transporteinrichtung (7), und einer der Austragsöffnung (5) zugeordneten Dosiereinrichtung (8), **gekennzeichnet durch** eine zum Mischen des Futters im Aufnahmebehälter (2) wirksame Mischeinrichtung (11), die eine im Bereich der Einfüllöffnung (2e) hin und zurück verschiebbare Einfülleinheit (212, 312) mit einer Verteil- und/oder Zerkleinerungseinrichtung (214, 314) für das Futter enthält.

9. Futterdosierwagen nach Anspruch 8, **dadurch gekennzeichnet, dass** die Einfülleinheit (212, 312) einen Einfüllbehälter (213, 313), wenigstens eine im Einfüllbehälter (213, 313) angeordnete, um eine im Wesentlichen horizontale Achse drehbar angetriebene Verteil - und/oder Zerkleinerungswalze (214a, 214b, 314a, 314b) und eine Übergabeöffnung (215, 315) auf die Transporteinrichtung (7) aufweist.

10. Futterdosierwagen nach Anspruch 7 oder 9, **dadurch gekennzeichnet, dass** die Drehrichtung der Walze (112a, 112b, 214a, 214b, 314a, 314b) umkehrbar ist.

11. Futterdosierwagen nach Anspruch 9 oder 10, **dadurch gekennzeichnet, dass** zwei im Wesentlichen vertikal übereinanderliegende Walzen (314,a, 314b) vorgesehen sind.

12. Futterdosierwagen nach einem der Ansprüche 8 bis 10, **dadurch gekennzeichnet, dass** die Einfülleinheit (312) wenigstens zwei jeweils um eine horizontale Achse drehbare Walzen (314a, 314b) enthält, wobei die Walzen (314a, 314b) im Wesentlichen horizontal nebeneinanderliegend angeordnet sind und einen Einzugsspalt (315) zwischen sich definieren.

13. Futterdosierwagen nach Anspruch 12, **dadurch gekennzeichnet, dass** die Einfülleinheit (312) Begrenzungselemente (313a, 313b) an den in Verschieberichtung vorderen und hinteren Seiten der Walzen (314a, 314b) aufweist, die nach oben über die Walzen überstehen und mit den Walzen einen Einfüllbehälter (313) für das Futter definieren.

14. Futterdosierwagen nach einem der Ansprüche 8 bis 13, **dadurch gekennzeichnet, dass** der Einfüllbehälter (313) eine Einstelleinrichtung (319) zur Einstellung auf verschiedene Futterarten enthält.

15. Futterdosierwagen nach einem der Ansprüche 12 bis 14, **dadurch gekennzeichnet, dass** die Dosiereinrichtung (8) zwei um horizontale Achsen drehbare, zu einer Walzeneinheit verbundene und im Bereich der Austragsöffnung (5) übereinander angeordnete Dosierwalzen (314a, 314b) aufweist, und dass die Walzeneinheit von der Austragsöffnung (5) unter Drehung der Walzen (314a, 314b) in eine horizontal nebeneinander liegende Stellung in den Bereich der Einfüllöffnung (2e) hinein und über die Einfüllöffnung (2e) hin und zurück verschiebbar angeordnet ist.

16. Futterdosierwagen nach einem der Ansprüche 9 bis 15, **dadurch gekennzeichnet, dass** der Einfüllbehälter (313) zwei erste, als Begrenzungselemente (313a, 313b) ausgebildete und zwei zweite als Einstelleinrichtung (319) ausgebildete Klappen (319a, 319b) aufweist.

17. Futterdosierwagen nach einem der Ansprüche 1 bis 16, **dadurch gekennzeichnet, dass** eine Zerkleinerungseinrichtung (8a, 8b; 112a, 112b, 214a, 214b, 314a, 314b) zum Zerkleinern von Futterballen vorgesehen ist.

18. Futterdosierwagen nach einem der Ansprüche 1 bis 17, **dadurch gekennzeichnet, dass** die dem Boden (2c) zugeordnete Transporteinrichtung (7) einen Flachförderer (115), insbesondere eine Bodenkette, enthält.

19. Futterdosierwagen nach Anspruch 18, **dadurch gekennzeichnet, dass** der Flachförderer (115) mit seinem ersten Trum (115a) oberhalb und mit seinem zweiten Trum (115b) unterhalb des Bodens (2c) verläuft.

20. Futterdosierwagen nach einem der Ansprüche 1 bis 19, **dadurch gekennzeichnet, dass** die Austragsöffnung (5) durch eine Abdeckung (2d, 302d) verschließbar ist.

21. Futterdosierwagen nach Anspruch 20, **dadurch gekennzeichnet, dass** die Abdeckung (2d, 302d) so an die Form der Dosiereinrichtung angepasst, insbesondere gekrümmt ist, dass ein Festsetzen von Futter vermeidbar ist.

22. Futterdosierwagen nach einem der Ansprüche 1 bis 21, **dadurch gekennzeichnet, dass** nach der Austragsöffnung (5) ein Verteilförderer (9) vorgesehen ist.

23. Futterdosierwagen nach einem der Ansprüche 1 bis 22, **dadurch gekennzeichnet, dass** die Mischeinrichtung (11) eine Einrichtung (14) zum Schrägstellen des Bodens (2c) um eine im Wesentlichen parallel zur Fahrtrichtung (F) verlaufende Achse und/oder um eine im Wesentlichen quer zur Fahrtrichtung (F) verlaufende Achse umfasst.

24. Futterdosierwagen nach Anspruch 1, **dadurch gekennzeichnet, dass** die Transporteinrichtung (7) zwei am Boden (2c) in Richtung auf die Austragsöffnung (5) hintereinander angeordnete, um eine im Wesentlichen vertikale Achse drehend angetriebene Verteilscheiben (12a, 12b) enthält, die Futter zu wenigstens einer vor der Austragsöffnung (5) angeordneten Dosierwalze (8a, 8b) fördern, und dass die Mischeinrichtung (11) jeweils einen Mischarm (13a), der an jeder Verteilscheibe (12a, 12b) unter einem Winkel zum Boden (2c) nach oben vorsteht, und eine Kippeinrichtung (14) zum Verkippen des Bodens (2c) enthält.

25. Futterdosierwagen nach Anspruch 6, **dadurch gekennzeichnet, dass** die Transporteinrichtung (7) einen am Boden (2c) angeordneten Flachförderer (115) enthält, der Futter zur Dosiereinrichtung (8) mit zwei vor der Austragsöffnung (5) übereinander angeordneten Dosierwalzen (112a, 112b) fördert, und dass die Mischeinrichtung (11) die im Inneren des Aufnahmebehälters (2) hin und zurück bewegbaren Dosierwalzen (112a, 112b) enthält.

26. Futterdosierwagen nach Anspruch 8, **dadurch gekennzeichnet, dass** die Transporteinrichtung (7) einen am Boden (2c) angeordneten Flachförderer (115) enthält, der Futter zu wenigstens einer vor der Austragsöffnung (5) angeordneten Dosierwalze (8a, 8b) fördert, und dass die Mischeinrichtung (11) eine der Einfüllöffnung (2d) zugeordnete Einfülleinheit (212, 312) enthält, die in Richtung auf die Austragsöffnung (5) und von ihr weg bewegbar ist, wobei die Einfülleinheit (212, 312) einen Einfüllbehälter (213, 313), wenigstens eine im Einfüllbehälter (213, 312) angeordnete Verteil- und/oder Zerkleinerungswalze (214a, 214b, 314a, 314b), sowie eine Übergabeöffnung (215, 315) auf den Flachförderer enthält.

27. Futterdosierwagen nach Anspruch 8, **dadurch gekennzeichnet, dass** die Transporteinrichtung (7) einen am Boden (2c) angeordneten Flachförderer (115) enthält, der Futter zur Dosiereinrichtung (8) mit zwei vor der Austragsöffnung (5) übereinander angeordneten Dosierwalzen (314a. 314b) fördert, und dass die Mischeinrichtung (11) eine Einfülleinheit (312) enthält, die die in der Einfüllöffnung (2e) hin und zurück bewegbaren Dosierwalzen (314a, 314b) enthält, die im Bereich der Einfüllöffnung (2e) im Wesentlichen horizontal nebeneinanderliegend angeordnet sind.

## Claims

1. Foraging dosing vehicle (1), with a receptacle (2) equipped with a filling aperture (2e), a discharge aperture (5) and a floor (2c), a transport device (7) associated with the floor (2c) and a dosing device (8) associated with the discharge aperture (5), **characterised by** a mixing device (11) for mixing the feed in the receptacle (2), this mixing device containing at least one distribution baffle (12a, 12b), which can be driven in rotation around an axis pointing upwards from the floor (2c).

2. Foraging dosing vehicle according to Claim 1, **characterised in that** the distribution baffle (12a, 12b) contains at least one mixing arm (13a) extending upwards at an angle from the floor (2c).

3. Foraging dosing vehicle according to Claim 1 or 2, **characterised in that** the distribution baffle (12a, 12b) comprises a mixing arm (13b) running substantially parallel to the floor (2c).

4. Foraging dosing vehicle according to Claim 2 or 3, **characterised in that** the mixing arm (13a, 13b) contains a substantially triangular support surface pointing upwards.

5. Foraging dosing vehicle according to any of Claims 1 to 4, **characterised in that** the distribution device (12) is at least partially designed as the transport device (7) associated with the floor (2c).

6. Foraging dosing vehicle (101), with a receptacle (2) equipped with a filling aperture (2e), a discharge aperture (5) and a floor (2c), a transport device (7) associated with the floor (2c) and a dosing device (8) associated with the discharge aperture (5), **characterised by** a mixing device (11) for mixing the feed in the receptacle (2), this mixing device comprising a device (113a, 116) for moving a mixing element (112) inside the receptacle (2).

7. Foraging dosing vehicle according to Claim 6, **characterised in that** the dosing device (8) contains at least one dosing roller (112a, 112b) which is designed as a mixing element (112) and can be moved forwards and backwards from the discharge aperture (5) substantially parallel to the floor (2c) through the inside of the receptacle (2).

8. Foraging dosing vehicle (201), with a receptacle (2) equipped with a filling aperture (2e), a discharge aperture (5) and a floor (2c), a transport device (7) associated with the floor (2c) and a dosing device (8) associated with the discharge aperture (5), **characterised by** a mixing device (11) for mixing the feed in the receptacle (2), this mixing device containing a filling unit (212, 312) which can be moved forwards and backwards in the vicinity of the filling aperture (2e) with a distribution and/or crushing device (214, 314) for the feed.

9. Foraging dosing vehicle according to Claim 8, **characterised in that** the filling unit (212, 312) comprises a filling container (213, 313), at least one distribution and/or crushing roller (214a, 214b, 314a, 314b) positioned in the filling container (213, 313) and which can be driven in rotation around a substantially horizontal axis and a transfer aperture (215, 315) on the transport device (7).

10. Foraging dosing vehicle according to Claim 7 or 9, **characterised in that** the direction of rotation of the roller (112a, 112b, 214a, 214b, 314a, 314b) can be reversed.

11. Foraging dosing vehicle according to Claim 9 or 10, **characterised in that** two rollers which are located one on top of the other in a substantially vertical position (314a, 314b) are provided.

12. Foraging dosing vehicle according to any of Claims 8 to 10, **characterised in that** the filling unit (312) contains at least two rollers (314a, 314b) which can be rotated around a horizontal axis in each case, the rollers (314a, 314b) being next to each other in a substantially horizontal position and defining an intake gap (315) between the rollers.

13. Foraging dosing vehicle according to Claim 12, **characterised in that** the filling unit (312) comprises limiting elements (313a, 313b) on the front and rear sides of the rollers (314a, 314b) in the direction of movement, which project upwards above the rollers and, with the rollers, define a filling container (313) for the feed.

14. Foraging dosing vehicle according to any of Claims 8 to 13, **characterised in that** the filling container (313) contains an adjustment device (319) for adjusting to various feed types.

15. Foraging dosing vehicle according to any of Claims 12 to 14, **characterised in that** the dosing device (8) comprises two dosing rollers (314a, 314b) positioned on top of one another in the vicinity of the discharge aperture (5) which can be rotated around horizontal axes and are joined to form a roller unit, and **in that** the roller unit is positioned such that it can be moved forwards and backwards and from the discharge aperture (5) by rotating the rollers (314a, 314b) into a horizontal position in the vicinity of the filling aperture (2e) where they are positioned next to one another and above the filling aperture (2e) .

16. Foraging dosing vehicle according to any of Claims 9 to 15, **characterised in that** the filling container (313) comprises two first flaps (319a, 319b) designed as limiting elements (313a, 313b) and two second flaps (319a, 319b) designed as an adjustment device (319).

17. Foraging dosing vehicle according to any of Claims 1 to 16, **characterised in that** a crushing device (8a, 8b; 112a, 112b, 214a, 214b, 314a, 314b) is provided to crush feed balls.

18. Foraging dosing vehicle according to any of Claims 1 to 17, **characterised in that** the transport device (7) associated with the floor (2c) contains a flat conveyor (115), and in particular a floor chain.

19. Foraging dosing vehicle according to Claim 18, **characterised in that** the flat conveyor (115) runs with its first side (115a) above the floor (2c) and its second side (115b) below the floor (2c).

20. Foraging dosing vehicle according to any of Claims 1 to 19, **characterised in that** the discharge aperture (5) can be closed by a cover (2d, 302d).

21. Foraging dosing vehicle according to Claim 20, **characterised in that** the cover (2d, 302d) is adapted to the shape of the dosing device and in particular is curved such as to prevent the feed getting stuck.

22. Foraging dosing vehicle according to any of Claims 1 to 21, **characterised in that** a distribution conveyor (9) is provided after the discharge aperture (5).

23. Foraging dosing vehicle according to any of Claims 1 to 22, **characterised in that** the mixing device (11) comprises a device (14) for inclining the floor (2c) around an axis running substantially parallel to the direction of travel (F) and/or an axis running substantially across the direction of travel (F).

24. Foraging dosing vehicle according to Claim 1, **characterised in that** the transport device (7) contains two distribution baffles (12a, 12b) driven in rotation around a substantially vertical axis and located behind one another on the floor (2c) in the direction of the discharge aperture (5), where these baffles convey the feed to at least one dosing roller (8a, 8b) located in front of the discharge aperture (5), and **in that** the mixing device (11) contains a mixing arm (13a), which projects upwards on each distribution baffle (12a, 12b) at an angle from the floor (2c), and a tilting device (14) for tilting the floor (2c).

25. Foraging dosing vehicle according to Claim 6, **characterised in that** the transport device (7) contains a flat conveyor (115) located on the floor (2c), which conveys feed to the dosing device (8) with two dosing rollers (112a, 112b) located on top of one another in front of the discharge aperture (5), and **in that** the mixing device (11) contains the dosing rollers (112a, 112b) which can be moved backwards and forwards inside the receptacle (2).

26. Foraging dosing vehicle according to Claim 8, **characterised in that** the transport device (7) contains a flat conveyor (115) located on the floor (2c) which conveys feed to at least one dosing roller (8a, 8b) located in front of the discharge aperture (5), and **in that** the mixing device (11) contains a filling unit (212, 312) associated with the filling aperture (2d), where this filling unit can be moved in the direction of and away from the discharge aperture (5), the filling unit (212, 312) containing a filling container (213, 313), at least one distribution and/or crushing roller (214a, 214b, 314a, 314b) located in the filling container (213, 312) and a transfer aperture (215, 315) on the flat conveyor.

27. Foraging dosing vehicle according to Claim 8, **characterised in that** the transport device (7) contains a flat conveyor (115) located on the floor (2c), which conveys feed to the dosing device (8) with two dosing rollers (314a, 314b) located on top of one another in front of the discharge aperture (5), and **in that** the mixing device (11) contains a filling unit (312) which contains the dosing rollers (314a, 314b) which can be moved backwards and forwards inside the filling aperture (2e), these rollers being in a substantially horizontal position next to each other in the vicinity of the filling aperture (2e).

## Revendications

1. Véhicule de dosage de fourrage (1) avec un conteneur (2) pourvu d'une ouverture de remplissage (2e), d'une ouverture de déchargement (5) et d'un fond (2c), avec un dispositif de transport (7) associé au fond (2c), et avec un dispositif de dosage (8) associé à l'ouverture de déchargement (5), **caractérisé par** un dispositif mélangeur (11) qui est efficace pour mélanger le fourrage dans le conteneur (2) et qui contient au moins une plaque de répartition (12a, 12b) apte à être entraînée en rotation sur un axe dirigé vers le haut à partir du fond (2c).

2. Véhicule de dosage de fourrage selon la revendication 1, **caractérisé en ce que** la plaque de répartition (12a, 12b) contient au moins un bras mélangeur (13a) qui s'étend vers le haut suivant un certain angle par rapport au fond (2c).

3. Véhicule de dosage de fourrage selon la revendication 1 ou 2, **caractérisé en ce que** la plaque de répartition (12a, 12b) comporte un bras mélangeur (13b) qui s'étend globalement parallèlement au fond (2c).

4. Véhicule de dosage de fourrage selon la revendication 2 ou 3, **caractérisé en ce que** le bras mélangeur (13a, 13b) contient une surface d'appui globalement triangulaire qui s'étend vers le haut.

5. Véhicule de dosage de fourrage selon l'une des revendications 1 à 4, **caractérisé en ce que** le dispositif de répartition (12) est conçu au moins partiellement comme un dispositif de transport (7) associé au fond (2c).

6. Véhicule de dosage de fourrage (101) avec un conteneur (2) pourvu d'une ouverture de remplissage (2e), d'une ouverture de déchargement (5) et d'un fond (2c), avec un dispositif de transport (7) associé au fond (2c), et avec un dispositif de dosage (8) associé à l'ouverture de déchargement (5), **caractérisé par** un dispositif mélangeur (11) qui est efficace pour mélanger le fourrage dans le conteneur (2) et qui comporte un dispositif (113a, 116) pour faire coulisser un élément mélangeur (112) à l'intérieur du conteneur (2).

7. Véhicule de dosage de fourrage selon la revendication 6, **caractérisé en ce que** le dispositif de dosage (8) contient au moins un cylindre de dosage (112a, 112b) qui est conçu comme un élément mélangeur (112) et qui est apte à décrire un mouvement de va-et-vient à l'intérieur du conteneur (2), globalement parallèlement au fond (2c), à partir de l'ouverture de déchargement (5).

8. Véhicule de dosage de fourrage (201) avec un conteneur (2) pourvu d'une ouverture de remplissage (2e), d'une ouverture de déchargement (5) et d'un fond (2c), avec un dispositif de transport (7) associé au fond (2c), et avec un dispositif de dosage (8) associé à l'ouverture de déchargement (5), **caractérisé par** un dispositif mélangeur (11) qui est efficace pour mélanger le fourrage dans le conteneur (2) et qui contient une unité de remplissage (212, 312) apte à décrire un mouvement coulissant de va-et-vient dans la zone de l'ouverture de remplissage (2e) et pourvue d'un dispositif de répartition et/ou de broyage (214, 314) pour le fourrage.

9. Véhicule de dosage de fourrage selon la revendication 8, **caractérisé en ce que** l'unité de remplissage (212, 312) comporte un récipient de remplissage (213, 313), au moins un cylindre de répartition et/ou de broyage (214a, 214b, 314a, 314b) qui est disposé dans le récipient de remplissage (213, 313) et qui est entraîné en rotation sur un axe globalement horizontal, et un dispositif de transfert (215, 315) vers le dispositif de transport (7).

10. Véhicule de dosage de fourrage selon la revendication 7 ou 9, **caractérisé en ce que** le sens de rotation du cylindre (112a, 112b, 214a, 214b, 314a, 314b) est apte à être inversé.

11. Véhicule de dosage de fourrage selon la revendication 9 ou 10, **caractérisé en ce qu'**il est prévu deux cylindres (314a, 314b) superposés globalement verticalement.

12. Véhicule de dosage de fourrage selon l'une des revendications 8 à 10, **caractérisé en ce que** l'unité de remplissage (312) contient au moins deux cylindres (314a, 314b) aptes à tourner chacun sur un axe horizontal (314a, 314b), étant précisé que les cylindres (314a, 314b) sont disposés côte à côte globalement horizontalement et définissent entre eux un interstice d'introduction (315).

13. Véhicule de dosage de fourrage selon la revendication 12, **caractérisé en ce que** l'unité de remplissage (312) comporte des éléments de limitation (313a, 313b), sur les côtés des cylindres (314a, 314b) avant et arrière, dans le sens de coulissement, qui dépassent des cylindres vers le haut et qui définissant avec les cylindres un récipient de remplissage (313) pour le fourrage.

14. Véhicule de dosage de fourrage selon l'une des revendications 8 à 13, **caractérisé en ce que** le récipient de remplissage (313) contient un dispositif de réglage (319) en vue d'être réglé pour différents types de fourrage.

15. Véhicule de dosage de fourrage selon l'une des revendications 12 à 14, **caractérisé en ce que** le dispositif de dosage (8) comporte deux cylindres de dosage (314a, 314b) qui sont aptes à tourner sur des axes horizontaux, qui sont réunis en une unité de cylindres et qui sont superposés dans la zone de l'ouverture de déchargement (5), et **en ce que** l'unité de cylindres est disposée pour pouvoir entrer en coulissant, moyennant une rotation des cylindres (314a, 314b), dans la zone de l'ouverture de remplissage (2e) jusqu'à une position juxtaposée horizontalement, et pour pouvoir décrire un mouvement coulissant de va-et-vient au-dessus de ladite ouverture de remplissage (2e).

16. Véhicule de dosage de fourrage selon l'une des revendications 9 à 15, **caractérisé en ce que** le récipient de remplissage (313) comporte deux premiers volets (319a, 319b) conçus comme des éléments de limitation (313a, 313b), et deux deuxièmes volets (319a, 319b) conçus comme un dispositif de réglage (319).

17. Véhicule de dosage de fourrage selon l'une des revendications 1 à 16, **caractérisé en ce qu'**il est prévu un dispositif de broyage (8a, 8b ; 112a, 112b, 214a, 214b, 314a, 314b) pour broyer des balles de fourrage.

18. Véhicule de dosage de fourrage selon l'une des revendications 1 à 17, **caractérisé en ce que** le dispositif de transport (7) associé au fond (2c) contient un convoyeur plat (115), en particulier une chaîne de fond.

19. Véhicule de dosage de fourrage selon la revendication 18, **caractérisé en ce que** le convoyeur plat (115) s'étend avec son premier brin (115a) au-dessus du fond (2c), et avec son deuxième brin (115b) au-dessous du fond (2c).

20. Véhicule de dosage de fourrage selon l'une des revendications 1 à 19, **caractérisé en ce que** l'ouverture de déchargement (5) est apte à être obturée par un recouvrement (2d, 302d).

21. Véhicule de dosage de fourrage selon la revendication 20, **caractérisé en ce que** le recouvrement (2d, 302d) est adapté à la forme du dispositif de dosage, et est en particulier courbe, de manière à pouvoir éviter un blocage du fourrage.

22. Véhicule de dosage de fourrage selon l'une des revendications 1 à 21, **caractérisé en ce qu'**il est prévu, après l'ouverture de déchargement (5), un convoyeur de répartition (9).

23. Véhicule de dosage de fourrage selon l'une des revendications 1 à 22, **caractérisé en ce que** le dispositif mélangeur (11) comprend un dispositif (14) pour incliner le fond (2c) sur un axe globalement parallèle au sens de déplacement (F) et/ou sur un axe globalement transversal par rapport au sens de déplacement (F).

24. Véhicule de dosage de fourrage selon la revendication 1, **caractérisé en ce que** le dispositif de transport (7) contient deux plaques de répartition (12a, 12b) qui sont disposées l'une derrière l'autre sur le fond (2c), en direction de l'ouverture de déchargement (5), qui sont entraînées en rotation sur un axe globalement vertical, et qui transportent le fourrage jusqu'à au moins un cylindre de dosage (8a, 8b) disposé avant l'ouverture de déchargement (5), et **en ce que** le dispositif mélangeur (11) contient un bras mélangeur (13a) qui dépasse de chaque plaque de répartition (12a, 12b), vers le haut, suivant un certain angle par rapport au fond (2c), et un dispositif de basculement (14) pour faire basculer le fond (2c).

25. Véhicule de dosage de fourrage selon la revendication 6, **caractérisé en ce que** le dispositif de transport (7) contient un convoyeur plat (115) qui est disposé sur le fond (2c) et qui transporte le fourrage jusqu'au dispositif de dosage (8) pourvu de deux cylindres de dosage (112a, 112b) superposés avant l'ouverture de déchargement (5), et **en ce que** le dispositif mélangeur (11) contient les cylindres de dosage (112a, 112b) aptes à décrire un mouvement de va-et-vient à l'intérieur du conteneur (2).

26. Véhicule de dosage de fourrage selon la revendication 8, **caractérisé en ce que** le dispositif de transport (7) contient un convoyeur plat (115) qui est disposé sur le fond (2c) et qui transporte le fourrage jusqu'à au moins un cylindre de dosage (8a, 8b) disposé avant l'ouverture de déchargement (5), et **en ce que** le dispositif mélangeur (11) contient une unité de remplissage (212, 312) qui est associée à l'ouverture de remplissage (2d) et qui est apte à être rapprochée et éloignée de l'ouverture de déchargement (5), étant précisé que l'unité de remplissage (212, 312) contient un récipient de remplissage (213, 313), au moins un cylindre de répartition et/ou de broyage (214a, 214b) disposé dans le dispositif de remplissage (213, 312), et une ouverture de transfert (215, 315) vers le convoyeur plat.

27. Véhicule de dosage de fourrage selon la revendication 8, **caractérisé en ce que** le dispositif de transport (7) contient un convoyeur plat (115) qui est disposé sur le fond (2c) et qui transporte le fourrage jusqu'au dispositif de dosage (8) pourvu de deux cylindres de dosage (314a, 314b) superposés avant l'ouverture de déchargement (5), et **en ce que** le dispositif mélangeur (11) contient une unité de remplissage (312) qui contient les cylindres de dosage (314a, 314b) aptes à décrire un mouvement de va-et-vient dans l'ouverture de remplissage (2e) et disposés côte à côte, globalement horizontalement, dans la zone de l'ouverture de remplissage (2e).
